(19) **Europäisches Patentamt / European Patent Office / Office européen des brevets**

(11) **EP 1 994 267 B1**

(12) **EUROPEAN PATENT SPECIFICATION**

(45) Date of publication and mention
of the grant of the patent:
**09.04.2014 Bulletin 2014/15**

(21) Application number: **07751320.8**

(22) Date of filing: **20.02.2007**

(51) Int Cl.:
*F02B 67/06* (2006.01)   *F16H 9/04* (2006.01)

(86) International application number:
**PCT/US2007/004551**

(87) International publication number:
**WO 2007/108887 (27.09.2007 Gazette 2007/39)**

(54) **VARIABLE RATIO BELT DRIVE SYSTEM**

RIEMENANTRIEBSSYSTEM MIT VARIABLER ÜBERSETZUNG

SYSTEME DE TRANSMISSION PAR COURROIE A RAPPORT VARIABLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.03.2006 US 375982**

(43) Date of publication of application:
**26.11.2008 Bulletin 2008/48**

(73) Proprietor: **The Gates Corporation
Denver, CO 80202 (US)**

(72) Inventor: **SERKH, Alexander
Troy, MI 48098-4696 (US)**

(74) Representative: **Tunstall, Christopher Stephen et al
Carpmaels & Ransford LLP
One Southampton Row
London WC1B 5HA (GB)**

(56) References cited:
**WO-A-2005/103527    FR-A1- 2 486 610
JP-A- 1 170 723    JP-A- 5 086 881**

Printed by Jouve, 75001 PARIS (FR)

**Description**

<u>Field of the Invention</u>

The invention relates to a dual ratio belt drive system for driving vehicle engine accessories at a first speed ratio and at a second speed ratio.

<u>Background of the Invention</u>

Vehicle engines generally comprise accessories that are used in the operation of the engine and vehicle. Such accessories can include a power steering pump, an air conditioning compressor, an alternator, an oil pump, a fuel pump and so on. These accessories are generally driven by a serpentine belt. The serpentine belt engages a pulley on each accessory as well as on an engine crankshaft. The engine crankshaft provides the torque to drive the accessories.
As the belt is driven by the crankshaft it is necessarily subject to engine speed variations during acceleration and deceleration of the vehicle. In other words the operating speed of the accessories is directly proportional to the speed of the engine.
The variations in engine speed, particularly engine speeds greater than idle, result in inefficient operation of the accessories because each accessory must be designed to operate satisfactorily over the entire engine speed range. This necessarily means that the efficiency is less than optimum for most of the engine speed range. Further, at higher engine speeds greater power is required to drive the accessories, resulting in reduced fuel efficiency and reduced available torque.. Therefore it is desirable to decouple some or all of the accessories £rom the engine crankshaft so they can be driven at a lower and narrower optimum speed range.
Representative of the art is US patent number 5,700,121 (1997) to Meckstroth which discloses a system for powering various rotating vehicle accessories.
The prior art requires the accessories to be disengaged from the engine at engine start for the purpose of "helping" a minimally sized starter. Further, the prior art does not teach a clutch unit combined with a crankshaft damper for reducing application of engine vibration.
What is needed is a dual ratio belt drive system for driving vehicle engine accessories at a first speed ratio and at a second speed ratio. The present invention meets this need.
WO 2005/103527 describes and depicts a dual ratio belt-drive system for powering rotating accessories. The system comprises a clutch unit rotatably connected to a rotating shaft and an overrunning clutch mounted directly to the rotating shaft. The system also comprises a plurality of rotating accessories rotatably connected to the clutch unit and rotatably connected to the rotating shaft through the over-running clutch such that the accessories are driven by the clutch unit at a first speed ratio and driven directly by the rotating shaft at a second speed ratio. The clutch unit operates at a predetermined value of an engine operating condition thereby defining the transition between the first and second speed ratios. The system described and depicted in WO 2005/103527 is described more fully herein with reference to Figs. 1-12 of the drawings, which do not form part of the present invention.

<u>Summary of the Invention</u>

The primary aspect of the invention is to provide a dual ratio belt drive system for driving vehicle engine accessories at a first speed ratio and at a second speed ratio.
Other aspects of the invention will be pointed out or made obvious by the following description of the invention and the accompanying drawings.
A belt drive system of the invention comprises a driver member, the driver member rotatably connected to a first pulley by a first endless member and to a second pulley by a second endless member. An electromagnetic clutch is mechanically disposed between the first pulley and the second pulley for selectively transmitting torque from the first endless member to the second endless member. The electromagnetic clutch when engaged causes the first pulley and the second pulley to rotate at the same rotational speed. A one-way clutch is disposed between the second endless member and the driver member for selectively decoupling the second endless member from the driver member. A first accessory is rotatably connected to the first pulley and to the driver member by the first endless member and a second accessory is rotatably connected to the second pulley and to the one-way clutch by the second endless member.
In a first mode, corresponding to engine speed approximately idle, the electromagnetic clutch is engaged, the second accessory is driven by the electromagnetic clutch at a relatively high speed ratio and the one-way clutch overruns.
In a second mode, corresponding to engine speed greater than idle, the electromagnetic clutch is disengaged and the second accessory is driven by the one-way clutch at a relatively low speed ratio.

Brief Description of the Drawings

The accompanying drawings, which are incorporated in and form a part of the specification, illustrate the system described and depicted in WO 2005/103527 and, in the case of Figs. 13-16, preferred embodiments of the present invention, and together with a description, serve to explain the principles of the invention.

Fig. 1 is a schematic of a dual ratio belt drive system.
Fig. 2 is a plan view schematic of a dual ratio belt drive system.
Fig. 3 is a half cross-sectional view of a clutch unit.
Fig. 4 is a half cross-sectional view of a dual pulley.
Fig. 4A is a half cross-sectional view of an alternative dual pulley system.
Fig. 5 is a schematic view of an alternate dual ratio belt drive system.
Fig. 6 is a plan view schematic of an alternate dual ratio belt drive system.
Fig. 7 is a schematic view of a second alternate dual ratio belt drive system.
Fig. 8 is a plan view schematic of a second alternate dual ratio belt drive system.
Fig. 9 is a half cross-sectional view of a second alternate clutch unit of the dual ratio belt drive system.
Fig. 9A is an alternate to the clutch unit in Fig. 9.
Fig. 10 is a half cross-sectional view of a dual pulley for the second alternate clutch unit of the dual ratio belt drive system.
Fig. 10A is a half cross-sectional view of an alternate to the dual pulley of Fig. 10.
Fig. 11 is a schematic of an alternate arrangement including a motor generator in a dual ratio belt drive system.
Fig. 12 is a plan view schematic of the alternate arrangement including a motor generator in Fig. 11.
Fig. 13 is a schematic of an embodiment of a the dual ratio belt drive system according to the present invention.
Fig. 14 is a plan view schematic of the embodiment of Fig. 13.
Fig. 15 is a schematic of an alternate embodiment of a multi ratio belt drive system according to the present invention.
Fig. 16 is a plan view schematic of the alternate embodiment in Fig. 15.

Detailed Description of the Preferred Embodiment

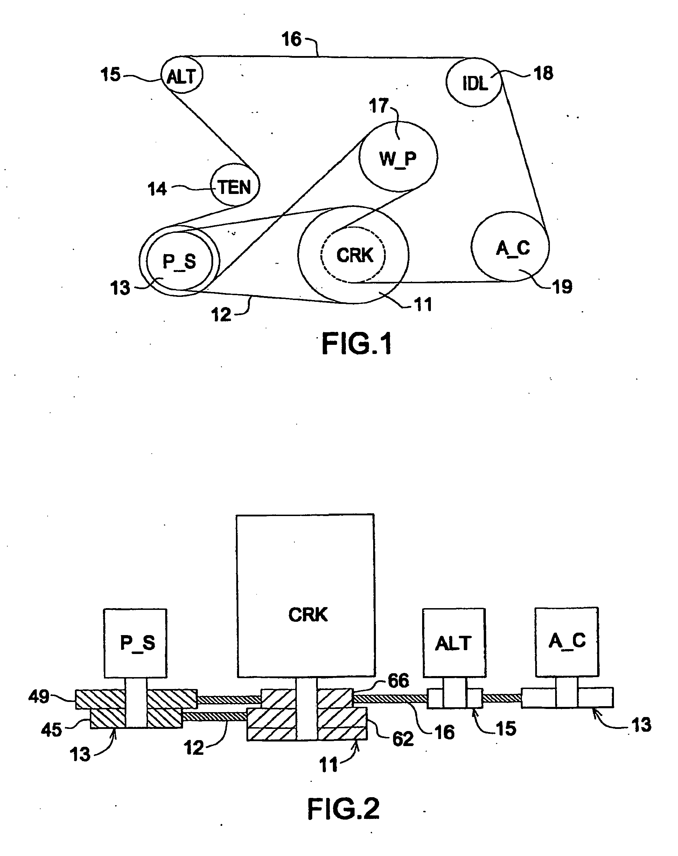

A dual ratio belt drive system is shown in Fig. 1. The system operates with a first or second pulley drive ratio which is selected through a clutch unit 11. At a first engine speed a first pulley ratio is used. At a second engine speed a second pulley ratio is used.

The system comprises two belts. The belt used to transmit torque is determined by the state of the clutch unit. The first pulley ratio or second pulley ratio is selected by engaging or disengaging the electromagnetic clutch unit 11. Engaging the clutch unit drives the system with a belt engaged with a first pulley on the clutch unit.

In the first mode (engine speed at approximately idle) the second belt on the system is not transmitting torque directly from the engine crankshaft, but is transmitting torque to the engine accessories from a dual pulley which is also engaged with the first belt.

In a second mode (engine speeds greater than idle) the clutch is disengaged which causes the first pulley and first belt to be decoupled from the system. The accessories are then being driven by the second belt which is engaged with a one-way clutch to the crankshaft. In the second mode the accessories are driven at a relatively slower speed than would be realized with the first belt because the second drive pulley ratio is less than the first drive pulley ratio. This is because the second mode second pulley has a smaller diameter than the first mode first pulley.

The system comprises a clutch unit 11 mounted to a driver rotating shaft such as an engine crankshaft (CRK). The clutch unit 11 comprises a first and second pulley as well as a crankshaft damper, isolator or both, and electromagnetic clutch. Unit 11 also comprises a one-way clutch.

Clutch unit 11 is drivingly connected to engine accessories water pump W_P (pulley 17), power steering pump P_S (pulley 13), alternator ALT (pulley 15), idler pulley IDL (pulley 18), and air conditioner compressor A_C (pulley 19) by a multiple-ribbed serpentine belt 16. Tensioner TEN (pulley 14) is positioned after the power steering pump dual pulley 13 based on clockwise movement from the crankshaft. Belt 16 is a multiple ribbed belt known in the art.

A second multiple-ribbed belt 12 connects clutch unit 11 with a dual pulley 13 connected to power steering pump P_S. In this embodiment belt 12 is installed on a two point drive. As shown on Fig. 2, belt 16 is physically disposed between the engine and belt 12.

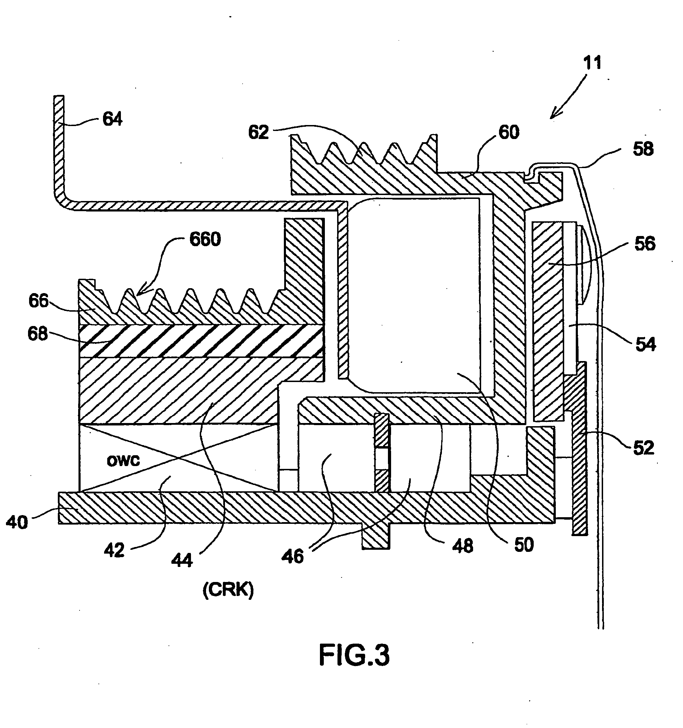

Clutch unit 11 as shown in Fig. 3 comprises hub 40 and one-way clutch 42 mounted thereon. Fig. 3 depicts the upper half of a cross-sectional view, the lower half being a mirror image and symmetric with the upper half. Hub 40 is directly connected to the engine crankshaft (CRK). Pulley 66 comprises an inner hub 44, a belt bearing outer portion 660, and a damping member 68 which is disposed between hub 44 and outer portion 660. Inner hub 44 is engaged with one-way clutch 42. Damping member 68 comprises an elastomeric material known in the crankshaft damper arts. Portion 660 has a multiple-ribbed profile, but may also comprise any profile known in the pulley arts.

Second pulley 62 is connected to rotor 48 of electromagnetic clutch 60. Rotor 48, and thereby pulley 62, are rotationally engaged with hub 40 by bearings 46. Bearings 46 are known in the art comprising ball, sleeve, needle or any another suitable for the service. Coil 50 of electromagnetic clutch 60 is attached to an engine block by a back plate 64.

Hub 40 is connected to electromagnetic clutch plate 56 thru a hub extension 52 and spring plates 54. Clutch unit 11 is covered by cover 58 which prevents dust and debris from entering the unit. Clutch plate 56 is engaged with rotor 48 depending on the energization state of coil 50. Coil 50 is connected to an engine electrical system. One can see the compact size of the clutch since coil 50 is contained within a width of pulley 62.

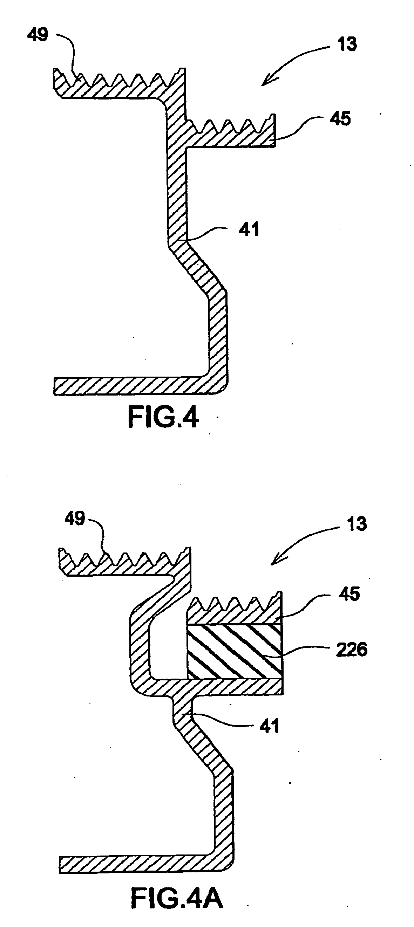

Referring to Fig. 2, pulley 66 of clutch unit 11 is connected to a first pulley 49 of the dual pulley 13 on power steering pump with belt 16. Fig. 4 is a cross sectional view of the dual pulley 13. Fig. 4 depicts the upper half of a cross-sectional view, the lower half being a mirror image and symmetric with the upper half. Dual pulley 13 comprises pulley 45 and pulley 49, each connected by web 41. Pulley 62 of clutch unit 11 is connected to pulley 45 of the dual pulley 13 with belt 12.

The system operates in two modes. Mode one is for relatively low engine speeds including idle. Mode two is for all other operating speeds, namely, above idle.

In mode one coil 50 of electromagnetic clutch 60 is energized and therefore the clutch is locked at engine start to allow start of the accessories along with the engine with belt 12. This method avoids the problem of a dip in engine speed if the accessories were brought up to speed after engine start as the clutch is engaged. In mode one pulley 62 and hub 40 rotate together because electromagnetic plate 56 is engaged with clutch 60, thereby rotationally locking pulley 62 to hub 40. Plate 56 is directly connected to hub 40 through hub extension 52, and thereby to the crankshaft CRK.

Pulley 62 transmits torque from the crankshaft through belt 12 to pulley 45 mounted on the power steering pump P_S. Fig. 4 is a cross-sectional view of a dual pulley. Pulley 49 rotates with the same speed as pulley 45. Pulley 49 transmits torque to all other accessories through belt 16.

In mode one pulley 66 is driven by belt 16 at a rotational speed faster than the rotational speed of pulley 62, therefore, one-way clutch 42 is disengaged. In mode one all accessories except the power steering pump are driven in series by belts 12 and 16, although no torque is transmitted from pulley 66 to hub 40.

For example, in case of 5.3L VB engine, example diameters of system pulleys in mm are as follows:

**TABLE 1**

| Crankshaft | | Power steering | | ALT | W_P | A_C |
|---|---|---|---|---|---|---|
| First (66) | Second (62) | First (49) | Second (45) | | | |
| 128 | 165 | 163 | 140 | 59 | 150 | 112 |

**Dual Ratio Pulley System Pulley Diameters**

The crankshaft/power steering pulley ratios in the system in Table 1 are as follows:

$$165/140 = 1.17 \quad \text{(Mode One [First] Ratio)}$$

$$128/163 = 0.78 \quad \text{(Mode Two [Second] Ratio)}$$

In mode one the accessories rotate with relatively the same speed as they would in the case of a direct-coupled accessory drive system.

For comparison purposes, exemplary prior art pulley diameters are shown below in mm:

**TABLE 2**

| Crankshaft | Power steering | ALT | W_P | A_C |
|---|---|---|---|---|
| 193 | 163 | 59 | 150 | 112 |

**Prior Art Pulley Diameters**

The crankshaft/power steering pulley ratio in the prior art system in Table 2 is as follows:

$$193/163 = 1.18$$

This ratio is substantially the same as the Mode One [First] Ratio as calculated for Table 1 above. This illustrates that the accessory drive ratios are substantially the same between the systems in Table 1 and 2. However, the relative accessory pulley diameters may be different in the inventive system depending on weight, production costs, speed and other system requirements.

A comparison between the crankshaft diameter in Table 2 with the crankshaft pulley (66) diameter in Table 1 is:

$$193/128 = 1.5$$

This illustrates an overall accessory speed reduction afforded by the system over the prior art system at engine speeds above idle.

Pulley 62 may have a prior art system diameter of 193 mm instead of 165 mm. The diameter of pulley 62 can be reduced to 165 mm in the inventive system due to the smaller diameter of pulley 45, namely, 140 mm instead of 163 mm. In mode one the ratio between crankshaft and power steering pump remains the same: 193/163=165/140=1.17.

In mode two electromagnetic clutch 60 is disengaged and clutch 42 is engaged. During the transition from mode one to mode two the clutch may be disengaged over a period of time, for example three seconds, to reduce shock to the belts and system. Coil 50 is electrically connected to an energy source such as a vehicle battery or alternator and is controlled by an engine CPU. The CPU comprises a computer, memory and connecting buswork and wiring. The CPU detects predetermined engine operating conditions and the CPU calculates a predetermined value for engaging or disengaging the clutch unit based on at least one of a plurality of sensed operating conditions, with said sensed conditions comprising accessory load, engine speed, battery charge, throttle position, engine coolant temperature, vehicle gear selection, vehicle speed, manifold absolute pressure, ambient air temperature, air mass flow rate and accelerator position. As a selected operating condition is traversed either by engine acceleration or deceleration, the clutch is energized or de-energized accordingly.

In mode two second pulley 62 is free running with rotor 48 on ball bearings 46, hence no torque is transmitted between hub 40 and pulley 62. No torque is transmitted between pulley 45 and pulley 62 by belt 12. The accessories are driven solely by belt 16 because clutch 42 is disengaged. Clutch 42 causes pulley 66 to be driven by hub 40. The engine transmits torque through pulley 66 to the accessories.

In case of rapid engine deceleration when accessories due to their inertia may transmit torque towards the engine, clutch 42 disengages allowing the accessories to spin down at a rate less than the deceleration rate of the engine. This reduces wear on belt 16.

The diameter of pulley 66 is relatively smaller than the diameter of pulley 62. For example, the diameter of pulley 66 is 128 mm instead of 165mm. This reduced pulley ratio reduces the relative speed of all driven accessories by a factor of 1.5.

The system described requires minimum axial space for the belt drive system, however, unit 11 does require some extra axial space for electromagnetic clutch 50. This amounts to approximately 20-25mm.

Fig. 4A is a cross-sectional view of an alternative dual pulley system. Fig. 4A depicts the upper half of a cross-sectional view, the lower half being a mirror image and symmetric with the upper half. An elastomeric member 226 is disposed between web 41 and pulley 45. Dual pulley 13 is connected to an accessory, in this case the power steering pump P_S. Elastomeric member 226 acts as a vibration isolator to reduce the amplitude of engine vibrations that would otherwise be transmitted to the accessory through belt 12 from the crankshaft. The isolator primarily functions at engine idle since at speeds greater than idle clutch 11 disconnects pulley 45 from receiving torque from the crankshaft. The elastomeric member may comprise any natural or synthetic rubber or a combination of natural and synthetic rubbers, all known in the art.

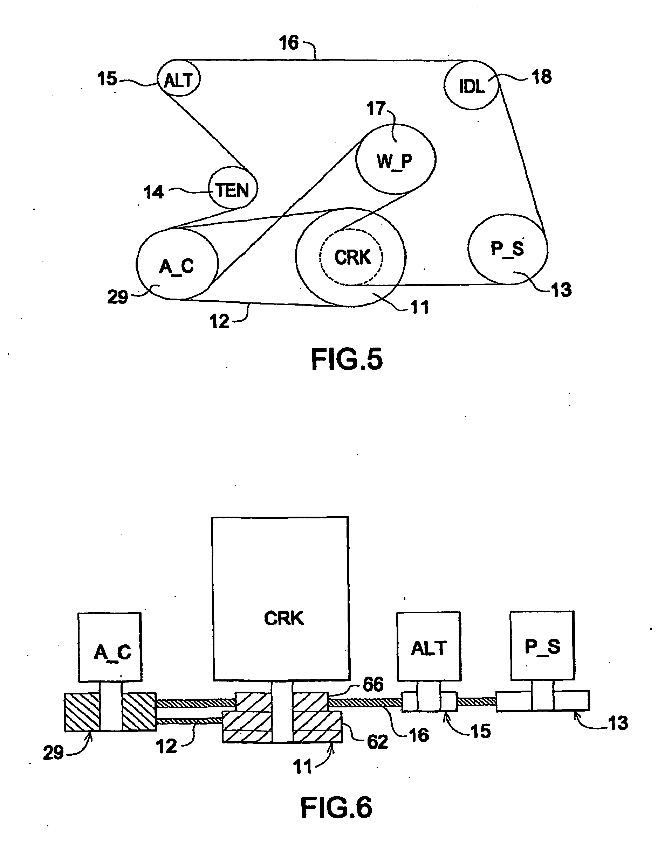

Figs. 5 and 6 show a first alternate where clutch unit 11 drive comprises a dual pulley assembly 29 connected to the air conditioning compressor.

In this case the diameter for each pulley is as follows:

**TABLE 3**

| Crankshaft | | A_C | | ALT | W_P | P_S |
|---|---|---|---|---|---|---|
| First (66) | Second (62) | First | Second | | | |
| 128 | 193 | 112 | 112 | 59 | 150 | 163 |

**Dual Ratio Pulley System Pulley Diameters**

The crankshaft/A_C pulley ratios in the system in Table 3 are as follows:

$$193/112 = 1.72 \quad \text{(Mode One [First] Ratio)}$$

$$128/112 = 1.14 \quad \text{(Mode Two [Second] Ratio)}$$

The operation of the system is the same as described for Figs. 1 and 2. An advantage of mounting the dual pulley on the air conditioning compressor is to utilize space available because the electromagnetic clutch is usually integrated into the air conditioner compressor pulley.

An operational concern is belt replacement. However, considering that belt 12 is used 5-10% of the time and that belt 16 is used all of the time, replacement will most likely be needed more often for belt 16 which is the most inwardly disposed belt with respect to the engine. In the disclosed systems, both belts will have to be removed even though replacement of only one may be required.

To address these concerns yet another system is described.

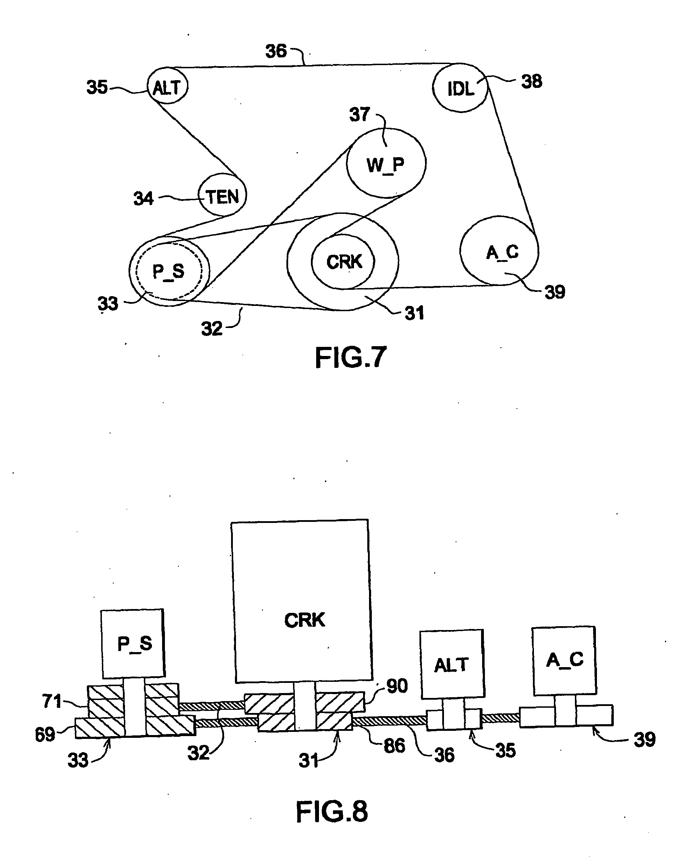

Figs. 7 and 8 show a second alternate system. The two point drive belt 32 is disposed relatively closer to the engine than the serpentine belt 36. Belt 36 is placed away from the engine outward from belt 32.

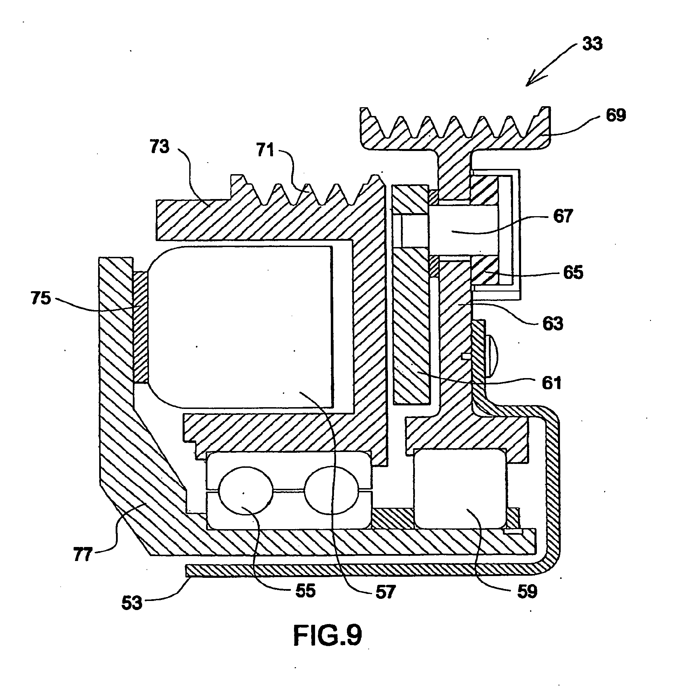

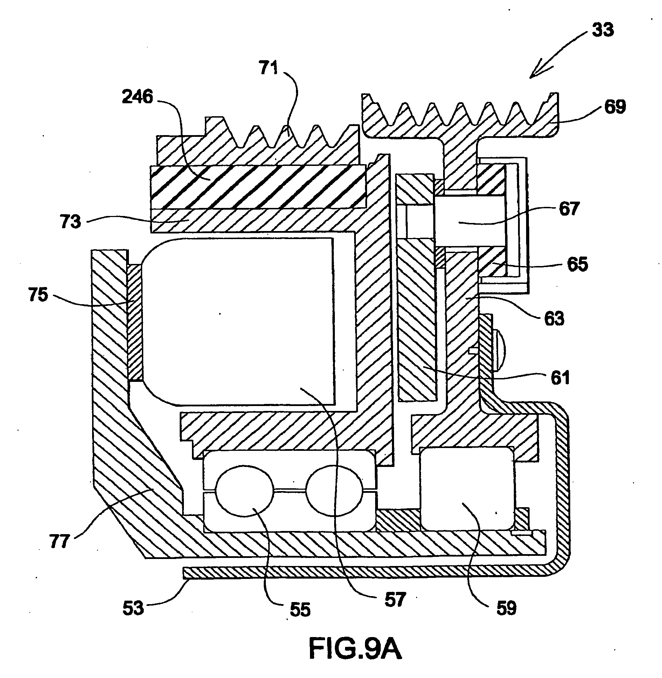

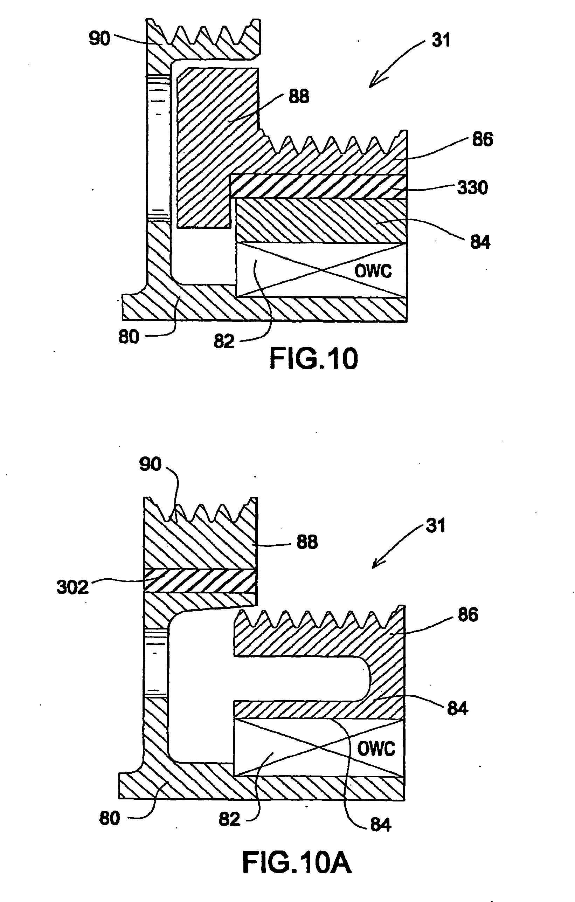

Even though the concept and function of all the elements is similar to the foregoing, the design and placement of the components are somewhat different. The primary difference in this second alternate is electromagnetic clutch unit 33 is mounted on the power steering unit P_S, see Fig. 9, instead of on the crankshaft. In this embodiment, dual pulley unit 31 is mounted to the crankshaft, see Fig. 10.

Referring again to Fig. 9, clutch unit 33 comprises an electromagnetic clutch with coil 57. Fig. 9 depicts the upper half of a cross-sectional view, the lower half being a mirror image and symmetric with the upper half. Coil 57 is attached to a stationary housing 77 thru back plate 75. Housing 77 does not rotate and is used to mount the clutch to a surface, for example, an engine surface. Rotor 73 with pulley 71 is rotatably installed on ball bearing 55 on housing 77. Bearing 55 comprises a ball bearing but may also comprise any suitable bearing known in the art. Clutch plate 61 is moveably attached to second pulley 69 with shafts 67, for example, three shafts 67 symmetrically spaced about pulley 69. Rubber pads 65 bias plate 61 away from rotor 73 when coil 57 is not energized. This method of attachment allows plate 61 to move axially from pulley 69 towards rotor 73 when the coil 57 is energized and the clutch is thereby engaged. Pulley 69 also comprises hub 53 by which pulley 69 is directly connected to an accessory, such as a power steering pump shaft. One can see the compact size of the clutch since coil 57 is contained within a width of pulley 71 and plate 61 is contained within a width of pulley 69.

Referring again to Fig. 8, in this second alternate system, in mode one the electromagnetic clutch 57 is engaged. Plate 61 has a frictional engagement with rotor 73, thereby causing pulley 71 and 69 to rotate in unison. Pulley 90 being rigidly connected to the crankshaft transmits torque to pulley 71. Belt 32 is under load. Pulley 69 is transmitting torque to all accessories including pulley 86, however, one-way clutch 82 is disengaged so no torque is transmitted from pulley 86 to hub 80. In this mode one-way clutch 82 is disengaged. All torque is being transmitted from pulley 90 through belt 32.

In mode two, when coil 57 is not energized, pulley 71 rotates freely and does not transmit torque since belt 32 is decoupled from the system. Clutch 82 is engaged and transmits torque to the accessories. Pulley 69 transmits torque since it is connected to hub 53, which is directly connected to an accessory shaft.

The diameters of all pulleys in mm described above are as follows:

**TABLE 4**

| Crankshaft | | Power steering | | ALT | W_P | A_C |
|---|---|---|---|---|---|---|
| First (86) | Second (90) | First (69) | Second (71) | | | |
| 128 | 165 | 163 | 140 | 59 | 150 | 112 |

**Dual Ratio Pulley System Pulley Diameters**

The crankshaft/power steering pulley ratios in the system in Table 4 are as follows:

$$165/140 = 1.18 \quad \text{(Mode One [First] Ratio)}$$

```
128/163 = 0.78   (Mode Two [Second] Ratio)
```

The diameter of first pulley 86 is determined in the same manner as described above. The speed of all accessories in this mode is approximately 1.5 times slower than a direct coupled prior art system.

The axial space required by the electromagnetic clutch 33 is allocated between the power steering pump and its dual pulley assembly. To accommodate this extra length is may be necessary for the power steering pump to be moved along the engine longitudinal axis towards engine flywheel.

The components are components known in the art. For example, the one-way clutches may be obtained from Formsprag. Electromagnetic clutches can be obtained from Ogura. For example, Figs. 3 and 9 show standard clutches, type 6 557162, torque capacity 128 N-m (Fig. 3) and type 10 515376, torque capacity 120 N-m.

Fig. 9A is an alternate to the clutch unit in Fig. 9. Fig. 9A depicts the upper half of a cross-sectional view, the lower half being a mirror image and symmetric with the upper half. In this embodiment elastomeric member 246 is disposed between pulley 71 and rotor 73. Elastomeric member 246 comprises a damper when unit 33 is connected directly to the crankshaft. In this embodiment member 246 comprises a vibration isolator when the clutch unit 33 is directly connected to an accessory shaft as shown in Fig. 8. Elastomeric member 246 may comprise any natural or synthetic rubber or a combination of natural and synthetic rubbers, all known in the art.

Fig. 10 is a cross-sectional view of the dual pulley for the second alternate to the clutch unit of the dual ratio belt drive system. Fig. 10 depicts the upper half of a cross-sectional view, the lower half being a mirror image and symmetric with the upper half. Dual pulley 31 is shown in a system in Fig. 8. Pulley 90 is connected to hub 80. Pulley 86 is rotatably engaged to hub 80 through one-way clutch 82. Elastomeric damping member 330 is disposed between pulley 86 and rotor 84. Member 330 damps crankshaft torsional vibrations. The elastomeric damping member may comprise any natural or synthetic rubber or a combination of natural and synthetic rubbers, all known in the art. Rotor 84 is engaged with one-way clutch 82. Pulley 86 further comprises inertial member 88 which helps to reduce speed and torsional transients caused by engine firing. Is also takes advantage of the inertia of the accessories when clutch 82 is being overridden. Inertial member 88 comprises a mass which size is selected in accordance with the vibrational and inertial characteristics of the engine crankshaft and the damping requirements of the system.

Fig. 10A is a cross-sectional view of an alternate to the dual pulley in Fig. 10. Fig. 10A depicts the upper half of a cross-sectional view, the lower half being a mirror image and symmetric with the upper half. An elastomeric damping member 302 is disposed between pulley 90 and hub 80. Dual pulley 31 is connected to the engine crankshaft. Member 302 acts as a damper to isolate crankshaft vibrations otherwise being transmitted through belt 16 to an accessory. The contribution of damper 302 is greatest at speeds above engine idle where damper 302 absorbs inertial loads and not torque loads since the clutch 60 is disengaged at engine speeds greater than idle. The elastomeric member may comprise any natural or synthetic rubber or a combination of natural and synthetic rubbers, all known in the art.

In any of the foregoing either belt 12 or belt 16 or both may comprise a low modulus belt known in the art. The low modulus belt comprises a belt having a tensile cord comprising nylon 4.6 or nylon 6.6 or a combination of the two. An elastic modulus of the belt is in the range of approximately 1500 N/mm to approximately 3000 N/mm. A feature of the low modulus belt is that it can be installed on a belt drive system without a tensioner or moveable shaft accessory. The low modulus belt is simply installed using a belt installation tool known in the art. The tool is used to roll or laterally urge the belt over an edge of a transmission pulley or accessory pulley without the need to otherwise adjust the center location of the pulley shaft. The low modulus belt is particularly suitable for the two point belt, i.e. belt 12 and 32, since equipping the transmission in such a way that it would otherwise be movable to allow installation and adjustment of belt 12, 32 might be more expensive than simply designing the transmission to be directly connected to an engine mounting surface such as an engine block. Further, adjusting the transmission shaft location with respect to the crankshaft would consume more assembly time as well.

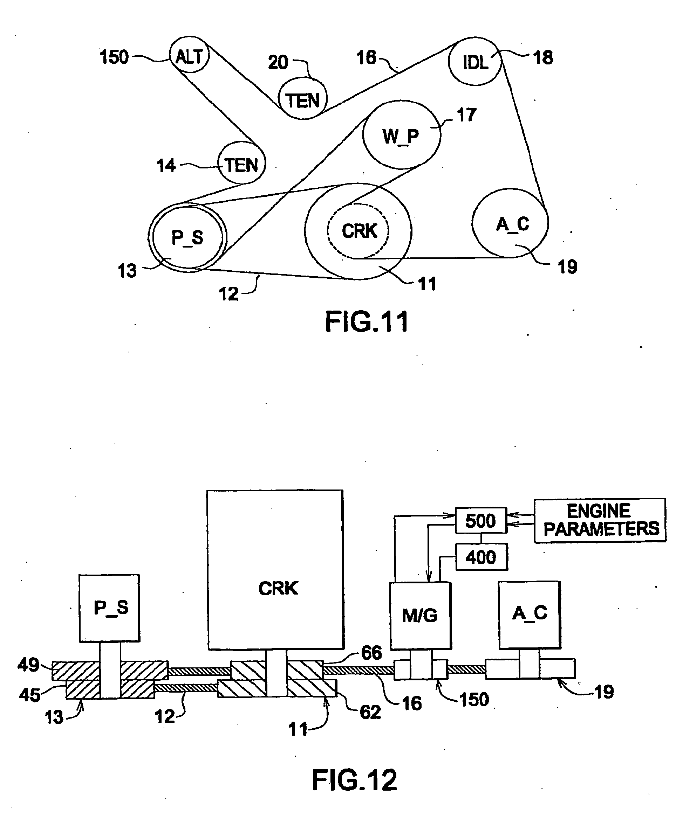

Fig. 11 is a schematic of an alternate system including a motor generator. Motor generator M/G is engaged with belt 16 through pulley 150 which is engaged with belt 16. Since motor generator M/G includes a generator, the alternator included in Fig. 1 is omitted. Further a tensioner Ten (pulley 20) is included to assure proper belt tension. Tensioner TEN is known in the art. Except as described in Fig. 12, the system shown in Fig. 11 is as described in Fig. 1.

Fig. 12 is a plan view schematic of the system including a motor generator. The alternate system operates in two modes.

Initially, in a first mode motor generator M/G is operated as a motor when the engine is off. When operated as a motor M/G runs the accessories, for example power steering pump (P_S) and air conditioning compressor (A_C), when the engine is OFF. In this mode the M/G is used to start the engine as required. After starting the engine M/G acts in a second mode as a power generator for powering vehicle accessories and for providing electrical energy for charging the battery 800.

When the engine is started from a state where the vehicle is stopped, M/G in motor mode cranks the engine. Clutch 60 is turned ON thereby engaging belt 12 and pulley 62, thereby transmitting torque from the M/G through belt 16 to pulley 13 to belt 12 to pulley 62 and thereby to the crankshaft.

During the engine start process, controller 500 detects the speed of M/G. Controller 500 causes inverter 400 to perform a switching operation such that a torque and speed required to start the engine are realized. For example, if a signal for switching the air conditioner A/C has been turned ON at engine start, a higher torque is required compared with the OFF state of the A/C. Therefore, controller 500 applies to inverter 400 a switching control signal to allow M/G to rotate at a higher torque with a greater speed.

The switching control signal may be determined by a variety of status signals of the engine and the vehicle which are provided to the controller 500 and thereby collated with a map memory stored in the memory. Alternatively, the switching control signal may be determined by calculations performed by the processor unit (CPU) disposed in controller 500.

Once the engine is running, the M/G operates as a generator and the dual ratio pulley operating modes described elsewhere in this specification are realized. Namely, clutch 60 is ON for engine stat and a first operating speed range, approximately idle speed, and clutch 60 is OFF, or disengaged, for a second operating speed range greater than approximately idle speed as described in this specification. The accessories are connected to the clutch unit and to the one-way clutch such that when the engine is operating the accessories are driven by the clutch unit at a first speed ratio and is driven by the one-way clutch at a second speed ratio, the first speed ratio and second speed ratio selected by an engine operating condition.

Use of the M/G in the system allows a dual fuel economy improvement to be realized. In the first instance a fuel economy improvement is realized by operating the accessories at a reduced speed ratio for speeds above idle. In the second instance a fuel economy improvement is realized by operation of the motor generator by allowing engine stop for predetermined vehicle operating situations, such as at a stop light.

More particularly, when the M/G is used as a generator and the engine is operating at approximately idle speed, clutch 60 is turned ON as described for Fig. 1. At engine speeds above idle, clutch 60 is turned OFF and one-way clutch 42 is in an engaged state, thereby transmitting torque from the crankshaft through pulley 66 through belt 16 to the accessories.

When the accessories are operated by the M/G in motor mode while the engine and crankshaft are stopped, clutch 60 is turned OFF. Since clutch 60 is OFF, in effect, this configuration acts as though the clutch unit 11 is in a 'neutral' gear thereby preventing transmission of torque from pulley 150 and belt 12 to the crankshaft. Further, in this mode one-way clutch 42 is in the over-running mode so no torque is transmitted from belt 16 to the crankshaft. Hence the accessories are driven by the M/G without turning the crankshaft. In this case controller 500 applies to inverter 400 a switching control signal to rotate the M/G at the speed and torque corresponding to the loads of the needed accessories. Of course, clutch 60 is also disengaged for engine speeds greater than idle as described for Figs. 1 and 2.

When an engine stop signal is received controller 500 stops the engine by transmitting a signal for interrupting fuel supply to the engine, for example, to an electric fuel pump (not shown). The engine stop operation can be performed under a condition where, for example, the vehicle speed is zero, the brakes are partially or fully applied, and the shift lever is in the D or N setting. The signal that stops the engine is used to disengage clutch 60, thereby decoupling belt 12 from the crankshaft.

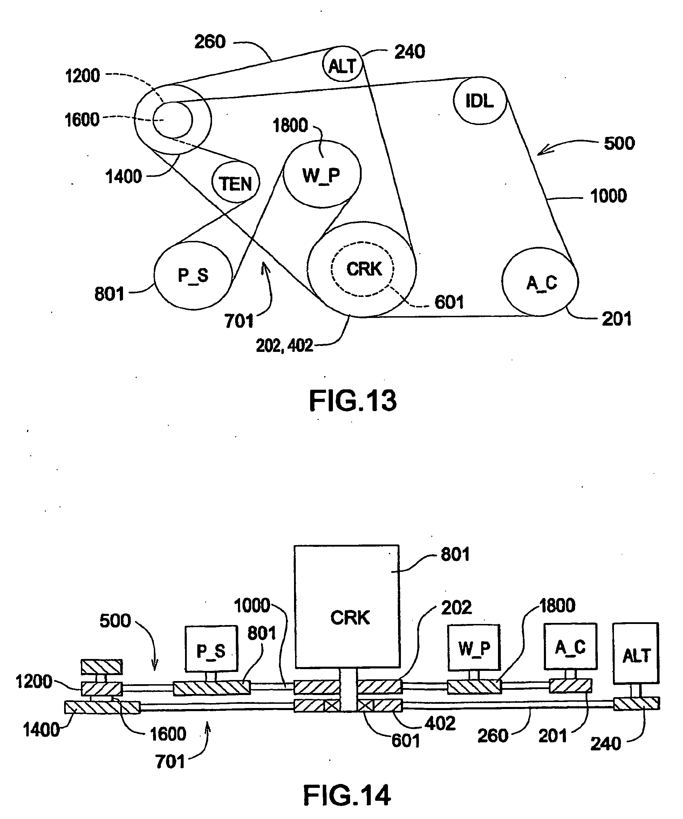

Fig. 13 is a schematic of a dual ratio belt drive system according to the invention. The inventive system provides a means of operating an engine accessory or accessories at a speed ratio greater than 1:1 at engine idle. That is, the accessory or accessories can be driven at a speed greater than that which would otherwise be realized at engine idle, in effect raising the apparent engine idle speed as seen by the accessory.

It is known that engine alternators are usually optimally sized for engine speeds greater than idle, for example, at normal operating or cruise speeds. They generally do not have sufficient charging capacity when the engine speed is reduced to idle. The problem of insufficient charging capacity at engine idle can be solved by operating the alternator at a higher speed, namely, at a speed consistent with an engine speed greater than idle when the engine is at idle.

The inventive system achieves a two-speed alternator operating capability whereby the speed of the alternator at engine idle is substantially increased and speed of the alternator at engine speeds greater than idle is reduced, each by a predetermined ratio.

The accessory drive system comprises a primary belt drive circuit 500 and secondary belt drive circuit 701. Primary belt drive circuit 500 does not include alternator ALT. Instead, alternator ALT is included in the secondary belt drive circuit 701.

As to the primary belt drive circuit 500, crankshaft pulley 202 is attached to and is directly driven by a driver, namely, an engine crankshaft 801. Endless member or belt 1000 is rotatably connected between crankshaft pulley 202 and water pump pulley 1800, an air conditioner compressor pulley 201 and a power steering pump pulley 801. Belt 1000 is also engaged with an idler pulley 1200. Belt 1000 transmits torque from the driver crankshaft pulley 202 to each of the pulleys 801, 1800, 201 and 1200. A tensioner TEN and idler IDL control belt tension and are used to route the belt on the engine. The diameter of pulley 402 can be the same as crankshaft pulley 202.

Secondary belt drive circuit 701 comprises crankshaft pulley 402 engaged to driver crankshaft 801 thru a one-way clutch 601. Endless member or belt 260 is connected between crankshaft pulley 402, an alternator pulley 240 and pulley 1400.

Pulleys 1200 and 1400 are characterized as "idlers" because they are not connected directly by a shaft to a load such as an accessory. An accessory may be directly connected to pulley 1200 if so desired. The ratio between the diameters of pulleys 1200 and 1400 determines in part the speed of the alternator (ALT) at engine idle.

An electromagnetic clutch 1600 is mechanically disposed between pulleys 1400 and 1200. When clutch 1600 is engaged pulleys 1200 and 1400 rotate at the same rotational speed. Since clutch 1600 is not a one-way clutch, when clutch 1600 is disengaged pulleys 1200 and 1400 are not mechanically connected and so no torque or power is transmitted between pulley 1200 and pulley 1400.

At an engine idle speed, for example, 900 RPM, clutch 1600 is engaged. Belt 1000 drives pulley 1200. Pulley 1200 is directly connected to pulley 1400 via engaged clutch 1600. Given a diameter of pulley 1400 greater than a diameter of pulley 1200, belt 260 of secondary drive 701 will be driven at a greater linear belt speed than belt 1000, and therefore alternator ALT will rotate relatively faster than would otherwise be caused by directly driving alternator ALT at the linear belt speed of belt 1000. In this operating mode pulley 402 by operation of one-way clutch 601 is in overrunning mode decoupling circuit 500 from circuit 701 since belt 260 is being driven at a greater linear speed than belt 1000. In this mode torque is only transmitted from crankshaft pulley 202 to belt 260 by way of belt 1000 through clutch 1600.

At engine speeds greater than idle, clutch 1600 is automatically disengaged, by operation of an engine ECU for example. Engine ECU's are known in the art. In this mode alternator pulley 240 is driven by torque transmitted through pulley 402 as it is driven by engaged one-way clutch 601. The speed of alternator ALT, assuming a given diameter for alternator pulley 240, is determined by the diameter of pulley 402. If the diameter of pulley 402 is the same as that of pulley 202, the speed of alternator ALT will not change in either operating mode.

However, the rotational speed of alternator ALT can be reduced at engine off idle speeds, for example at cruise speed, to improve its efficiency by reducing the diameter of pulley 402.

An example calculation to demonstrate an increase the speed of alternator ALT at engine idle by 1.6 times and to reduce the speed of alternator ALT at engine off idle speeds by 1.25 times follows. The switch point for operating clutch 1600 and thereby changing the alternator speed is at an engine speed of approximately 2,000 RPM for example.

Alternator speed increase (SI) at engine idle:

$$SI = (Z1400/Z1200)$$

Alternator speed decrease (SD) at engine off idle:

$$SD = (Z402/Z202)$$

Where "Z" denotes the diameter of a pulley.

SI = 1.6

SD = 1/1.25 = 0.8

Pulley diameters to satisfy these conditions are:

Z1400 = 96 mm

Z1200 = 60 mm

Z402 = (0.8 x Z202) mm

where Z202 is original diameter of crankshaft pulley 202 and is assumed to be unity for the purpose of this calculation.

Fig. 14 is a plan view schematic of the embodiment in Fig. 13. Since each is in the primary belt drive circuit 500, the power steering pump, water pump and air 19 conditioning compressor are driven by the crankshaft pulley 202 at a ratio to engine speed of 1:1.

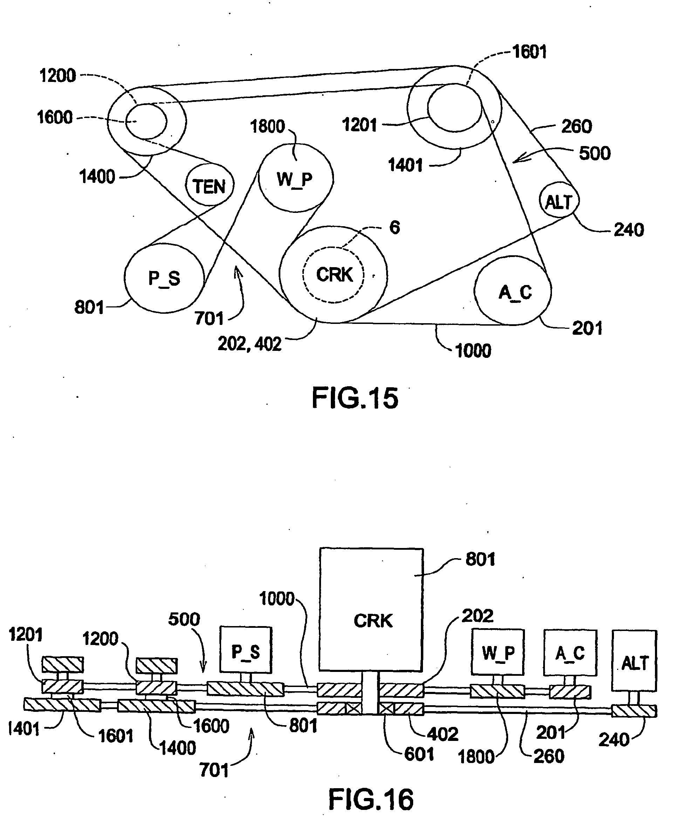

Fig. 15 is a schematic of an alternate arrangement for a multi ratio belt drive system according to the invention. The embodiment described in Fig. 15 and 16 is the same as that in Fig. 13 and 14 with the exception that a second pulley/clutch assembly similar to pulleys 1200, 1400 and clutch 1600 is added, namely pulleys 1201, 1401 and clutch 1601.

Pulley 1401 is engaged with belt 260. Pulley 1201 is engaged with belt 1000. Clutch 1601 is mechanically disposed between pulley 1201 and pulley 1401. The use of the second pulley clutch assembly expands the range of speed ratios available to drive alternator ALT.

A number of operating modes are made possible with this embodiment. For example, in mode 2 clutch 1601 is engaged. Belt 1000 drives pulley 1201. Pulley 1201 is connected to pulley 1401 via electromagnetic clutch 1601. Electromagnetic clutch 1601 is operated by an engine ECU, which is known in the art.

For this mode it is assumed that the diameter of pulley 1401 is greater than diameter of pulley 1201, therefore belt 260 of secondary belt drive circuit 701 will have a higher linear speed and alternator ALT will rotate faster. One-way clutch 601 is in overrunning mode. In this mode the speed of the alternator ALT is slower than the speed for the mode described in Fig. 13.

In mode 3, clutch 1600 and clutch 1601 are both disengaged. Pulleys 1400 and 1401 are each operating as idlers. One-way clutch 601 is engaged and transmitting torque to belt 260 through pulley 402. Alternator ALT is driven by pulley 402. The speed of alternator ALT in this mode (assuming that the diameter of pulley 240 is unchanged from Fig. 14) is determined by the diameter of pulley 402. If the diameter of pulley 402 is the same as that of pulley 202, the speed of alternator ALT will not change. However, the speed of alternator ALT can be reduced to improve its efficiency by reducing the diameter of pulley 402, in which case the speed of alternator then will be lower than that of a prior art system at engine idle.

Example:

Assume the need to increase the speed of alternator ALT in mode 1 by 2.0 times, in mode 2 by 1.2 times and reduce the speed of alternator ALT in mode 3 by 1.25 times.

In this case:

S1 = 2.0
S2 = 1.2
S3 = 1/1.25 = 0.8

Using the equations from Fig. 13, example pulley diameters to satisfy these conditions:

Z1400 = 120 mm.
Z1200 = 60 mm
Z1401 = 96 mm
Z1201 = 80 mm
Z402 = 0.8 * Z202

where Z202 is the original diameter of crankshaft pulley 202 from the previous example.

Fig. 16 is a plan view schematic of the alternate embodiment in Fig. 15.

The foregoing descriptions are not intended to limit the applications of the inventive system. In each of the foregoing embodiments the diameter of each pulley in the system can be selected to provide the desired drive ratio.

Although forms of the invention have been described herein, it will be obvious to those skilled in the art that variations may be made in the construction and relation of parts without departing from the scope of the invention which is defined by the appended claims.

**Claims**

1.   A belt drive system comprising:

a driver member (801);
the driver member rotatably connected to a first idler pulley (1200) by a first endless member (260) and to a second idler pulley (1400) by a second endless member (1000);
an electromagnetic clutch (1600) mechanically disposed between the first idler pulley (1200) and the second idler pulley (1400) for selectively transmitting torque from the first endless member to the second endless member, the electromagnetic clutch (1600) when engaged causing the first idler pulley (1200) and the second idler pulley (1400) to rotate at the same rotational speed; and
a one-way clutch (601) disposed between the second endless member (1000) and the driver member (801) for selectively decoupling the second endless member (1000) from the driver member (801); and
a first accessory (P_S, W_P, A_C) rotatably connected to the first pulley (1200) and to the driver member (801) by the first endless member (260); and
a second accessory (ALT) rotatably connected to the second pulley (1400) and to the one-way clutch (601) by the second endless member (1000);
whereby in a first mode, corresponding to engine speed approximately idle, the electromagnetic clutch (1600) is engaged, the second accessory (ALT) is driven by the electromagnetic clutch (1600) at a relatively high speed ratio and the one-way clutch (601) overruns; and

whereby in a second mode, corresponding to engine speed greater than idle, the electromagnetic clutch (1600) is disengaged and the second accessory (ALT) is driven by the one-way clutch (601) at a relatively low speed ratio.

**2.** The belt drive system as in claim 1, wherein:

the first pulley (1200) and the second pulley (1400) have unequal diameters.

**3.** The belt drive system as in claim 1, wherein the second accessory comprises an alternator.

**4.** The belt drive system as in claim 1, wherein the first accessory comprises a power steering pump, a water pump, an air conditioning compressor or any combination thereof.

**Patentansprüche**

**1.** Riemenantriebssystem, umfassend:

ein Treiberelement (801);
wobei das Treiberelement durch ein erstes endloses Element (260) mit einer ersten Leitscheibe (1200) und durch ein zweites endloses Element (1000) mit einer zweiten Leitscheibe (1400) drehbar verbunden ist;
eine elektromagnetische Kupplung (1600), die mechanisch zwischen der ersten Leitscheibe (1200) und der zweiten Leitscheibe (1400) angeordnet ist, um ein Drehmoment selektiv von dem ersten endlosen Element zu dem zweiten endlosen Element zu übertragen, wobei die elektromagnetische Kupplung (1600) dann, wenn sie in Eingriff steht, verursacht, dass sich die erste Leitscheibe (1200) und die zweite Leitscheibe (1400) mit der gleichen Umdrehungsgeschwindigkeit drehen; und
eine Einwegkupplung (601), die zwischen dem zweiten endlosen Element (1000) und dem Treiberelement (801) angeordnet ist, um das zweite endlose Element (1000) selektiv von dem Treiberelement (801) zu entkoppeln; und
ein erstes Zubehörteil (P.S, W.P, A.C), das durch das erste endlose Element (260) drehbar mit der ersten Leitscheibe (1200) und dem Treiberelement (801) verbunden ist; und
ein zweites Zubehörteil (ALT), das durch das zweite endlose Element (1000) drehbar mit der zweiten Leitscheibe (1400) und mit der Einwegkupplung (601) verbunden ist;
wobei in einem ersten Modus, der ungefähr einer im Leerlauf befindlichen Motorgeschwindigkeit entspricht, die elektromagnetische Kupplung (1600) in Eingriff steht, das zweite Zubehörteil (ALT) durch die elektromagnetische Kupplung (1600) mit einem verhältnismäßig hohen Geschwindigkeitsverhältnis angetrieben wird, und die Einwegkupplung (601) frei läuft; und
wobei in einem zweiten Modus, der einer Motorgeschwindigkeit entspricht, die höher als der Leerlauf ist, die elektromagnetische Kupplung (1600) gelöst ist und das zweite Zubehörteil (ALT) durch die Einwegkupplung (601) mit einem verhältnismäßig niedrigen Geschwindigkeitsverhältnis angetrieben wird.

**2.** Riemenantriebssystem nach Anspruch 1, wobei
die erste Scheibe (1200) und die zweite Scheibe (1400) ungleiche Durchmesser aufweisen.

**3.** Riemenantriebssystem nach Anspruch 1 wobei das zweite Zubehörteil eine Lichtmaschine umfasst.

**4.** Riemenantriebssystem nach Anspruch 1, wobei das erste Zubehörteil eine Lenkhelfpumpe, eine Wasserpumpe, einen Klimaanlagenkompressor oder eine beliebige Kombination davon umfasst.

**Revendications**

**1.** Système de transmission par courroie comprenant :

un organe d'entraînement (801) ;
l'organe d'entraînement étant relié de manière rotative à une première poulie folle (1200) par un premier organe sans fin (260) et à une deuxième poulie folle (1400) par un deuxième organe sans fin (1000) ;
un embrayage électromagnétique (1600) disposé mécaniquement entre la première poulie folle (1200) et la deuxième poulie folle (1400) pour transmettre de manière sélective un couple du premier organe sans fin au deuxième organe sans fin, l'embrayage électromagnétique (1600) provoquant, lorsqu'il est engagé, la rotation de la première poulie folle (1200) et de la deuxième poulie folle (1400) à la même vitesse de rotation ; et

un embrayage unidirectionnel (601) disposé entre le deuxième organe sans fin (1000) et l'organe d'entraînement (801) pour désaccoupler de manière sélective le deuxième organe sans fin (1000) de l'organe d'entraînement (801) ; et

un premier accessoire (P_S, W_P, A_C) relié de manière rotative à la première poulie (1200) et à l'élément d'entraînement (801) par le premier organe sans fin (260) ; et

un deuxième accessoire (ALT) relié de manière rotative à la deuxième poulie (1400) et à l'embrayage unidirectionnel (601) par le deuxième organe sans fin (1000) ;

dans un premier mode, correspondant à un régime de moteur approximativement de ralenti, l'embrayage électromagnétique (1600) étant engagé, le deuxième accessoire (ALT) étant entraîné par l'embrayage électromagnétique (1600) à un rapport de transmission relativement élevé et l'embrayage unidirectionnel (601) tournant en roue libre ; et

dans un deuxième mode, correspondant à un régime de moteur supérieur au ralenti, l'embrayage électromagnétique (1600) étant débrayé et le deuxième accessoire (ALT) étant entraîné par l'embrayage unidirectionnel (601) à un rapport de transmission relativement bas.

2. Système de transmission par courroie selon la revendication 1, dans lequel :

la première poulie (1200) et la deuxième poulie (1400) ont des diamètres inégaux.

3. Système de transmission par courroie selon la revendication 1, dans lequel le deuxième accessoire comprend un alternateur.

4. Système de transmission par courroie selon la revendication 1, dans lequel le premier accessoire comprend une pompe de direction assistée, une pompe à eau, un compresseur de climatisation ou une combinaison quelconque de ceux-ci.

FIG.1

FIG.2

**FIG.3**

**FIG.4**

**FIG.4A**

**FIG.5**

**FIG.6**

**FIG.7**

**FIG.8**

FIG.9

FIG.9A

**FIG.10**

**FIG.10A**

FIG.11

FIG.12

**FIG.13**

**FIG.14**

**FIG.15**

**FIG.16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5700121 A, Meckstroth
- WO 2005103527 A